# EUROPÄISCHE PATENTSCHRIFT

(11) **EP 3 816 531 B1**
(45) Veröffentlichungstag und Bekanntmachung des Hinweises auf die Patenterteilung: **04.10.2023**
(21) Anmeldenummer: 20198677.5
(22) Anmeldetag: 28.09.2020
(51) Int. Cl.: F24F 11/84, F24F 12/00

(54) **VERFAHREN ZUR EINSTELLUNG EINES BETRIEBSZUSTANDES EINES KREISLAUFVERBUNDSYSTEMS EINER LUFTTECHNISCHEN, VORZUGSWEISE RAUMLUFTECHNISCHEN ANLAGE**
METHOD FOR ADJUSTING THE OPERATING STATE OF A CIRCUIT COMPOSITE SYSTEM OF AN AIR TECHNICAL, PREFERABLY SPACE-AIR TECHNICAL INSTALLATION
PROCÉDÉ DE RÉGLAGE D'UN ÉTAT DE FONCTIONNEMENT D'UN SYSTÈME DE RÉCUPÉRATION DE CHALEUR À CIRCULATION FERMÉE D'UNE INSTALLATION TECHNIQUE AÉRAULIQUE, DE PRÉFÉRENCE D'AIR AMBIANT

(30) Priorität: 31.10.2019 EP 19206460
(43) Veröffentlichungstag der Anmeldung: 05.05.2021
(73) Patentinhaber: TROX GmbH, 47506 Neukirchen-Vluyn (DE)
(72) Erfinder: Hetzel, Georg, 57462 Olpe (DE); Engbers, Jan, 48691 Vreden (DE)
(74) Vertreter: Dr. Stark & Partner Patentanwälte mbB

(56) Entgegenhaltungen:
- EP-A1- 2 910 866
- CH-A5- 599 510
- CN-A- 109 114 781
- DE-A1- 2 410 391
- DE-A1- 2 657 245
- DE-A1- 4 408 087
- DE-A1-102009 011 747
- US-A- 4 142 575

## Beschreibung

Die Erfindung betrifft ein Verfahren zur Einstellung eines Betriebszustandes eines Kreislaufverbundsystems einer lufttechnischen, vorzugsweise raumlufttechnischen Anlage, wobei das Kreislaufverbundsystem einen Wärmeaufnahmebereich und einen Wärmeabgabebereich aufweist und wobei der Wärmeaufnahmebereich und der Wärmeabgabebereich über zumindest eine, einen geschlossenen Kreislauf bildende und von einem Trägermedium durchströmte, Leitung verbunden sind, und wobei
entweder
   zum einen in dem Wärmeaufnahmebereich zumindest ein Wärmeübertrager angeordnet ist, mittels dem Wärme von einem warmen Luftvolumenstrom an das in der Leitung strömende Trägermedium abgegeben wird, und - sofern in dem Wärmeaufnahmebereich mehrere strömungstechnisch gesehen parallel zueinander angeordnete Wärmeübertrager angeordnet sind, mittels denen Wärme von einem warmen Luftvolumenstrom an das in der Leitung strömende Trägermedium abgegeben wird - jedem Wärmeübertrager zur Veränderung der diesen Wärmeübertrager durchströmenden Menge an Trägermedium ein mittels eines Antriebes steuerbares Ventil zugeordnet ist, und
   zum anderen in dem Wärmeabgabebereich mehrere strömungstechnisch gesehen parallel zueinander angeordnete Wärmeübertrager angeordnet sind, mittels denen Wärme von dem in der Leitung strömenden Trägermedium an einen kalten Luftvolumenstrom abgegeben wird, wobei jedem Wärmeübertrager zur Veränderung der diesen Wärmeübertrager durchströmenden Menge an Trägermedium ein mittels eines Antriebes steuerbares Ventil zugeordnet ist,
oder aber
   zum einen in dem Wärmeaufnahmebereich mehrere strömungstechnisch gesehen parallel zueinander angeordnete Wärmeübertrager angeordnet sind, mittels denen Wärme von dem in der Leitung strömenden Trägermedium an einen kalten Luftvolumenstrom abgegeben wird, wobei jedem Wärmeübertrager zur Veränderung der diesen Wärmeübertrager durchströmenden Menge an Trägermedium ein mittels eines Antriebes steuerbares Ventil zugeordnet ist, und
   zum anderen in dem Wärmeabgabebereich zumindest ein Wärmeübertrager angeordnet ist, mittels dem Wärme von einem warmen Luftvolumenstrom an das in der Leitung strömende Trägermedium abgegeben wird, und - sofern in dem Wärmeabgabebereich mehrere strömungstechnisch gesehen parallel zueinander angeordnete Wärmeübertrager angeordnet sind, mittels denen Wärme von einem warmen Luftvolumenstrom an das in der Leitung strömende Trägermedium abgegeben wird - jedem Wärmeübertrager zur Veränderung der diesen Wärmeübertrager durchströmenden Menge an Trägermedium ein mittels eines Antriebes steuerbares Ventil zugeordnet ist, und
wobei in der Leitung zur Erzielung einer Strömung, vorzugsweise in einem der beiden Übergangsbereiche, zumindest eine geregelte Pumpe vorgesehen ist und jeder Antrieb mittels einer Steuereinrichtung oder Regeleinrichtung ansteuerbar ist.

Kreislaufverbundsysteme, auch KV-Systeme genannt, stellen Wärmerückgewinnungsanlagen oder Wärmeverschiebesysteme dar. Bei Verwendung des Kreislaufverbundsystems in einer (raum)lufttechnischen Anlage wird mittels der in dem Wärmeaufnahmebereich angeordneten Wärmeübertrager Wärme von einem warmen Luftvolumenstrom an das in der Leitung strömende Trägermedium abgegeben und mittels der in dem Wärmeabgabebereich angeordneten Wärmeübertrager Wärme von dem in der Leitung strömenden Trägermedium an einen kalten Luftvolumenstrom abgegeben. Bei dem warmen Luftvolumenstrom kann es sich beispielsweise um abgeführte Raumluft und bei dem kalten Luftvolumenstrom kann es sich beispielsweise um zugeführte Außenluft handeln. Die Wärmeübertrager sind mittels einer Leitung verbunden, durch die ein Trägermedium strömt. In der Leitung ist zumindest eine geregelte Pumpe derart angeordnet, dass das Trägermedium im Kreis gefördert wird.

Für einen Betrieb des Kreislaufverbundsystems ist ein hydraulischer Abgleich erforderlich. Der hydraulische Abgleich dient der Einstellung eines Volumenstroms in einem verzweigten hydraulischen System. Ist beispielsweise in einem Strang der Volumenstrom zu niedrig, wird im Wege eines hydraulischen Abgleichs der Durchfluss in einem anderen Strang oder in mehreren anderen Strängen gedrosselt.

Weist ein Kreislaufverbundsystem beispielsweise sowohl in dem Wärmeabgabebereich als auch in dem Wärmeaufnahmebereich jeweils zwei strömungstechnisch gesehen parallel zueinander angeordnete Wärmeübertrager auf, ist eine Mengenregelung zwischen den zwei strömungstechnisch gesehen parallel zueinander angeordneten Wärmeübertragern im Wärmeabgabebereich bzw. im Wärmeaufnahmebereich erforderlich. Dies erfolgt beispielsweise durch das einem Wärmeübertrager zugeordnete steuerbare Ventil. Durch die geregelte Pumpe kann die transportierte Menge an Trägermedium, beispielsweise zur Anpassung an ein neues Lastverhältnis (neuer Betriebszustand), in dem Kreislaufverbundsystem dynamisch geregelt werden. Beim dynamischen Abgleich kann es bei der vorbeschriebenen Ausgestaltung des Kreislaufverbundsystems zu Schwingungen kommen. Die Regler, d. h. die Ventile, nehmen nicht ihre erforderliche Regelposition ein, sondern wechseln ihre Position beispielsweise abwechselnd zwischen voll offen oder ganz geschlossen. Ursächlich hierfür ist, dass die Regler, d. h. die Ventile, teilweise in Reihe geschaltet sind. So sind bei der vorbeschriebenen Ausgestaltung des Kreislaufverbundsystems beispielsweise die beiden Wärmeübertrager des Wärmeaufnahmebereichs in Reihe zu jedem der beiden Wärmeübertrager im Wärmeabgabebereich geschaltet. Aus der US-PS 4,142,575 ist ein umlaufendes Energierückgewinnungssystem bekannt.

Aufgabe der Erfindung ist es, die vorgenannten Nachteile zu vermeiden und ein Verfahren anzugeben, mittels dem beim Betrieb des Kreislaufverbundsystems jedem Wärmeübertrager der Volumenstrom zugeordnet wird, den er wegen seines derzeitigen Betriebszustandes benötigt.

Diese Aufgabe wird dadurch gelöst, dass während des Betriebs des Kreislaufverbundsystems
- in dem Wärmeaufnahmebereich - sofern mehrere Wärmeübertrager in dem Wärmeaufnahmebereich angeordnet sind - nur das Ventil von einem einzigen in dem Wärmeaufnahmebereich angeordneten Wärmeübertragers in eine ungeregelte fixierte Offenstellung verlagert wird und unverändert in seiner Offenstellung verbleibt und das Ventil zumindest eines in dem Wärmeaufnahmebereich angeordneten Wärmeübertragers geregelt wird
   und/oder
- in dem Wärmeabgabebereich - sofern mehrere Wärmeübertrager in dem Wärmeabgabebereich angeordnet sind - nur das Ventil von einem einzigen in dem Wärmeabgabebereich angeordneten Wärmeübertragers in eine ungeregelte fixierte Offenstellung verlagert wird und unverändert in seiner Offenstellung verbleibt und das Ventil zumindest eines in dem Wärmeabgabebereich angeordneten Wärmeübertragers geregelt wird.

Ein Ventil, das in seine ungeregelte fixierte Offenstellung verlagert ist, verbleibt in dieser Offenstellung. Unter energetischen Gesichtspunkten ist das betreffende Ventil in dieser Offenstellung zu 100% geöffnet. Mit Ausnahme der Stellung "vollständig geschlossen" kann ein Ventil, das in seine ungeregelte fixierte Offenstellung verlagert ist, neben der Stellung "100% geöffnet" auch jede beliebige Zwischenstellung einnehmen. In diesem Status kommt dem betreffenden Ventil keine Regelfunktion zu. Es dient nur der Überströmung für den verbleibenden Volumenstrom, d. h. es fungiert in dieser Stellung als Überströmventil.

Sofern mehrere Wärmeübertrager in dem Wärmeabgabebereich angeordnet sind, ist das Ventil eines einzigen in dem Wärmeaufnahmebereich angeordneten Wärmeübertragers in eine ungeregelte fixierte Offenstellung verlagert und verbleibt unverändert in dieser Offenstellung. Das gleiche gilt, sofern in dem Wärmeaufnahmebereich mehrere Wärmeübertrager angeordnet sind.

Sofern mehrere Wärmeübertrager in dem Wärmeabgabebereich angeordnet sind, wird zumindest ein Ventil eines in dem Wärmeabgabebereich angeordneten Wärmeübertragers geregelt. Das gleiche gilt, sofern in dem Wärmeaufnahmebereich mehrere Wärmeübertrager angeordnet sind.

Sofern mehrere parallele Wärmeübertrager in einem Bereich (Wärmeaufnahmebereich oder Wärmeabgabebereich) angeordnet sind, ist bei dem erfindungsgemäßen Verfahren in dem betreffenden Bereich immer eine ungeregelte Überströmeinrichtung in Form eines Ventils (Überströmventil) geschaffen, das in eine ungeregelte fixierte Offenstellung verlagert ist und unverändert in seiner Offenstellung verbleibt. Ein solches Ventil ist - wenn im Wärmeaufnahmebereich mehrere Wärmeübertrager angeordnet sind und wenn im Wärmeabgabebereich mehrere Wärmeübertrager angeordnet sind - sowohl im Wärmeaufnahmebereich als auch im Wärmeabgabebereich vorgesehen. Durch das erfindungsgemäße Verfahren werden die Regelkreise der einzelnen Ventile entkoppelt, so dass diese sich nicht mehr gegenseitig negativ beeinflussen.

Unter dem Übergangsbereich wird zum einen das Stück der Leitung bezeichnet, das sich zwischen dem Knotenpunkt, in dem die Leitungen der Wärmeübertrager des Wärmeaufnahmebereichs zusammengeführt sind, und dem Knotenpunkt, von dem die Leitungen der Wärmeübertrager des Wärmeabgabebereichs abgehen, erstreckt, sowie zum anderen das Stück der Leitung bezeichnet, das sich zwischen dem Knotenpunkt, in dem die Leitungen der Wärmeübertrager des Wärmeabgabebereichs zusammengeführt sind, und dem Knotenpunkt, von dem die Leitungen der Wärmeübertrager des Wärmeaufnahmebereichs abgehen, erstreckt.

In der Grundausführung ist bei dem erfindungsgemäßen Kreislaufverbundsystem entweder in dem Wärmeaufnahmebereich ein Wärmeübertrager und in dem Wärmeabgabebereich zumindest zwei Wärmeübertrager, wobei dann jedem Wärmeübertrager des Wärmeabgabebereichs zur Veränderung der diesen Wärmeübertrager durchströmenden Menge an Trägermedium ein mittels eines Antriebes steuerbares Ventil zugeordnet ist, angeordnet oder umgekehrt in dem Wärmeaufnahmebereich zumindest zwei Wärmeübertrager, wobei dann jedem Wärmeübertrager des Wärmeaufnahmebereichs zur Veränderung der diesen Wärmeübertrager durchströmenden Menge an Trägermedium ein mittels eines Antriebes steuerbares Ventil zugeordnet ist, und in dem Wärmeabgabebereich ein Wärmeübertrager angeordnet.

Es können bei dem erfindungsgemäßen Kreislaufverbundsystem in dem Wärmeaufnahmebereich und in dem Wärmeabgabebereich jeweils auch mehrere Wärmeübertrager angeordnet sein, wobei die Anzahl an Wärmeübertragern in dem Wärmeaufnahmebereich und in dem Wärmeabgabebereich gleich oder abweichend sein kann. So können beispielsweise in dem Wärmeaufnahmebereich zumindest zwei Wärmeübertrager und in dem Wärmeabgabebereich ebenfalls zwei Wärmeübertrager angeordnet sein. Bei einer solchen Ausgestaltung ist jedem Wärmeübertrager zur Veränderung der diesen Wärmeübertrager durchströmenden Menge an Trägermedium ein mittels eines Antriebes steuerbares Ventil zugeordnet.

Jede geregelte Pumpe kann beispielsweise mit einer bauseitig vorhandenen Gebäudeleittechnik oder mit einer übergeordneten speicherprogrammierbaren Steuerung/Regelung (SPS) verbunden sein, die die betreffende Pumpe regelt. Auf diese Weise kann die Menge des in dem Kreislaufverbundsystem im Kreislauf transportierten Trägermediums geregelt werden.

Der Wärmeaufnahmebereich und der Wärmeabgabebereich sind nicht einem festen Ort zugeschrieben. Vielmehr kann ein Bereich beispielsweise im Sommer den Wärmeaufnahmebereich und der gleiche Bereich beispielsweise im Winter den Wärmeabgabebereich darstellen.

Das Ventil eines nicht aktiven Wärmeübertragers ist vollständig geschlossen und wird nicht betätigt. Es nimmt insoweit keinen Einfluss auf das erfindungsgemäße Verfahren. Sofern beispielsweise der Wärmeaufnahmebereich drei Wärmeübertrager umfasst und einer der drei Wärmeübertrager ist nicht aktiv, ist das Ventil eines der beiden verbleibenden Wärmeübertrager des Wärmeaufnahmebereichs in eine ungeregelte fixierte Offenstellung verlagert und verbleibt unverändert in seiner Offenstellung, während das Ventil des anderen der beiden verbleibenden Wärmeübertrager des Wärmeaufnahmebereichs geregelt wird.

Es bietet sich an, wenn in der Leitung, vorzugsweise in einem der beiden Übergangsbereiche der Leitung, zumindest ein Sensor zur Bestimmung des in der Leitung strömenden Volumenstroms an Trägermedium vorgesehen ist. Ein solcher zentral angeordneter Volumenstromsensor ist nicht zwingend erforderlich.

Vorzugsweise ist dabei der Sensor auf der Druckseite der Pumpe angeordnet.

Zumindest bei einem Wärmeübertrager kann das diesem Wärmeübertrager zugeordnete Ventil in Strömungsrichtung des Trägermediums gesehen vorgelagert sein.

Zumindest einem Wärmeübertrager kann ein Sensor zur Bestimmung des durch diesen Wärmeübertrager strömenden Volumenstroms zugeordnet sein, wobei vorzugsweise der Sensor dem Wärmeübertrager in Strömungsrichtung des Trägermediums gesehen vorgelagert ist. Vorzugsweise ist jedem Wärmeübertrager jeweils ein Sensor zur Bestimmung des durch diesen Wärmeübertrager strömenden Volumenstroms zugeordnet, wobei vorzugsweise der Sensor dem jeweiligen Wärmeübertrager in Strömungsrichtung des Trägermediums gesehen vorgelagert ist. Es ist jedoch auch möglich, dass der Sensor dem jeweiligen Wärmeübertrager in Strömungsrichtung des Trägermediums gesehen nachgelagert ist. Es bietet sich an, wenn der Sensor zwischen dem dazugehörigen Ventil und dem dazugehörigen Wärmeübertrager angeordnet ist.

Als Trägermedium kann ein Wasser/Glykol-Gemisch verwendet werden, wobei auch andere geeignete Trägermedien eingesetzt werden können.

Als Trägermedium kann auch Wasser verwendet werden. Selbstverständlich sind als Trägermedium auch andere technische Wärmeträger verwendbar.

Jedem Antrieb kann eine eigene Steuereinrichtung oder eine eigene Regeleinrichtung zugeordnet sein. Die jedem Antrieb zugeordnete eigene Steuereinrichtung oder eigene Regeleinrichtung kann beispielsweise mit einer übergeordneten speicherprogrammierbaren Steuerung (SPS) verbunden sein, die jede eigene Steuereinrichtung oder eigene Regeleinrichtung entsprechend steuert bzw. regelt.

Alternativ kann allen Antrieben eine gemeinsame Steuereinrichtung oder eine gemeinsame Regeleinrichtung zugeordnet sein. So kann beispielsweise eine übergeordnete speicherprogrammierbare Steuerung (SPS) vorgesehen sein, die beispielsweise den Gesamtvolumenstrom bestimmt und auch die Pumpe entsprechend steuert bzw. regelt. Ferner kann die übergeordnete speicherprogrammierbare Steuerung (SPS) beispielsweise auch die einzelnen Ventile und deren Status, die in den Figuren als "Fixed Open", "Auto" und "0%" bezeichnet sind, steuern bzw. regeln.

Der in den Zeichnungen verwendete Begriff "Auto" bedeutet, dass das entsprechend bezeichnete Ventil des Wärmeübertragers geregelt wird.

Der in den Zeichnungen verwendete Begriff "Fixed Open" bedeutet, dass das entsprechend bezeichnete Ventil des Wärmeübertragers in seine ungeregelte fixierte Offenstellung verlagert ist und in dieser Offenstellung verbleibt. Das Ventil kann in dieser Offenstellung zu 100% geöffnet sein. Mit Ausnahme der Stellung "vollständig geschlossen" kann das betreffende Ventil neben der Stellung "100% geöffnet" auch jede beliebige Zwischenstellung einnehmen. Dem betreffenden Ventil kommt keine Regelfunktion zu. Es dient nur der Überströmung für den verbleibenden Volumenstrom.

Die in den Zeichnungen verwendete Bezeichnung "0%" bedeutet, dass das entsprechend bezeichnete Ventil das Ventil eines nicht aktiven Wärmeübertragers ist. Es ist vollständig geschlossen und wird nicht betätigt. Es nimmt insoweit keinen Einfluss auf das erfindungsgemäße Verfahren.

Zur Bestimmung des in der Leitung strömenden Volumenstroms, vorzugsweise zur Bestimmung des in einem der beiden Übergangsbereiche strömenden Volumenstroms, kann zumindest einer der einem Wärmeübertrager zugeordneten Sensoren verwendet werden. Selbstverständlich ist es auch möglich, mittels mehrerer oder mittels aller der jeweils einem Wärmeübertrager zugeordneten Sensoren des Kreislaufverbundsystems den Volumenstrom zu bestimmen. Zur Bestimmung des in der Leitung strömenden Volumenstroms, vorzugsweise zur Bestimmung des in einem der beiden Übergangsbereiche strömenden Volumenstroms, kann beispielsweise ein einem solchen Wärmeübertrager zugeordneter Sensor verwendet werden, dessen zugeordnetes Ventil nicht vollständig geöffnet ist und das geregelt wird. Befindet sich ein Ventil in seiner ungeregelten fixierten Offenstellung, die in der Figurenbeschreibung mit "Fixed Open" bezeichnet ist, ist gleichwohl eine Messung des Volumenstroms durch den diesem Ventil zugeordneten Sensor möglich. Das betreffende Ventil regelt jedoch den Volumenstrom nicht aus. Die Erfassung des Gesamtvolumenstroms für den Wärmeabgabebereich als auch für den Wärmeaufnahmebereich kann durch die Addition der Messwerte aller Wärmeübertrager, so wie es in dem nächsten Absatz beschrieben ist, erfolgen. Der betreffende Wärmeübertrager, dem ein in eine ungeregelte fixierte Offenstellung verlagertes Ventil und/oder ein geregeltes Ventil zugeordnet ist, wird noch von dem Trägermedium durchströmt.

Die Stellung des Ventils, dessen zugehöriger Sensor zur Bestimmung des Volumenstroms verwendet wird, muss nicht vollständig geöffnet sein. So kann der Sensor auch dann den Volumenstrom erfassen, wenn das dazugehörige Ventil teilweise geöffnet ist. Bei geschlossenem Ventil entspricht der Durchfluss 0 m³/h. Der Volumenstrom der beiden Übergangsbereiche ergibt sich aus der Summe aller parallel geschalteten Wärmeübertrager des Wärmeabgabebereichs oder aller parallel geschalteter Wärmeübertrager des Wärmeaufnahmebereichs.

Alternativ kann zur Bestimmung des in der Leitung strömenden Volumenstroms, vorzugsweise zur Bestimmung des in einem der beiden Übergangsbereiche strömenden Volumenstroms, ein solcher einem Wärmeübertrager zugeordneter Sensor verwendet werden, dessen zugeordnetes Ventil in eine ungeregelte fixierte Offenstellung verlagert wird und unverändert in seiner Offenstellung verbleibt.

Im Folgenden werden in den Zeichnungen dargestellte Ausführungsbeispiele der Erfindung erläutert. Es zeigen:
- Fig. 1 - 6: sechs verschiedene beispielhafte Betriebszustände eines ersten Ausführungsbeispiels eines erfindungsgemäßen Kreislaufverbundsystems,
- Fig. 7 - 9: drei verschiedene beispielhafte Betriebszustände eines zweiten Ausführungsbeispiels eines erfindungsgemäßen Kreislaufverbundsystems und
- Fig. 10 - 12: drei verschiedene beispielhafte Betriebszustände eines dritten Ausführungsbeispiels eines erfindungsgemäßen Kreislaufverbundsystems.

In den Figuren sind drei bzw. sechs verschiedene beispielhafte Betriebszustände dreier verschiedener Ausführungsbeispiele eines erfindungsgemäßen Kreislaufverbundsystems einer lufttechnischen Anlage dargestellt. In allen Figuren werden für gleiche bzw. gleichartige Bauteile übereinstimmende Bezugszeichen verwendet.

Das Kreislaufverbundsystem weist einen Wärmeaufnahmebereich 1 und einen Wärmeabgabebereich 2 auf. Der Wärmeaufnahmebereich 1 und der Wärmeabgabebereich 2 sind über eine einen geschlossenen Kreislauf bildende und von einem Trägermedium durchströmte Leitung 3 verbunden. Als Trägermedium kann beispielsweise ein Wasser/Glykol-Gemisch verwendet werden.

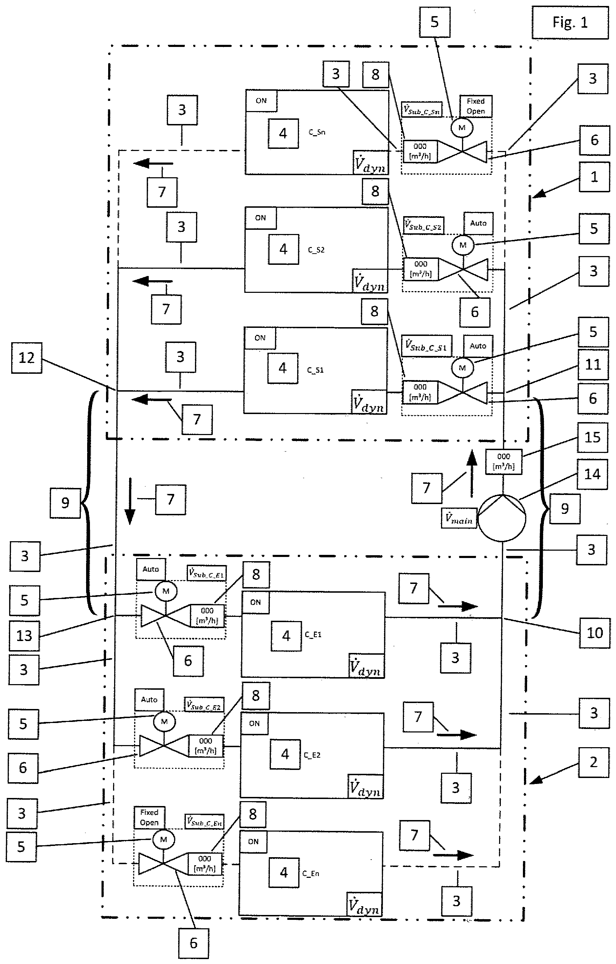

Bei dem Ausführungsbeispiel nach den Fig. 1 bis 6 sind in dem Wärmeaufnahmebereich 1 drei strömungstechnisch gesehen parallel zueinander angeordnete Wärmeübertrager 4 angeordnet, mittels denen Wärme von einem nicht dargestellten warmen Luftvolumenstrom an das in der Leitung 3 strömende Trägermedium abgegeben wird, wobei in dem dargestellten Ausführungsbeispiel jedem Wärmeübertrager 4 zur Veränderung der diesen Wärmeübertrager 4 durchströmenden Menge an Trägermedium ein mittels eines Antriebes 5 steuerbares Ventil 6 zugeordnet ist.

Auch in dem Wärmeabgabebereich 2 sind bei dem Ausführungsbeispiel nach den Fig. 1 bis 6 drei strömungstechnisch gesehen parallel zueinander angeordnete Wärmeübertrager 4 angeordnet, mittels denen Wärme von dem in der Leitung 3 strömenden Trägermedium an einen nicht dargestellten kalten Luftvolumenstrom abgegeben wird, wobei in dem dargestellten Ausführungsbeispiel wiederum jedem Wärmeübertrager 4 zur Veränderung der diesen Wärmeübertrager 4 durchströmenden Menge an Trägermedium ein mittels eines Antriebes 5 steuerbares Ventil 6 zugeordnet ist.

Wie in den Fig. 1 bis 6 dargestellt ist, ist bei jedem Wärmeübertrager 4 das diesem Wärmeübertrager 4 zugeordnete Ventil 6 in Strömungsrichtung 7 des Trägermediums gesehen vorgelagert. In dem in den Fig. 1 bis 6 dargestellten Ausführungsbeispiel ist jedem Wärmeübertrager 4 zusätzlich ein Sensor 8 zur Bestimmung des durch diesen Wärmeübertrager 4 strömenden Volumenstroms zugeordnet, wobei der Sensor 8 dem Wärmeübertrager 4 in Strömungsrichtung 7 des Trägermediums gesehen vorgelagert ist.

Zur einfacheren Beschreibung wird als Wärmeaufnahmebereich 1 die in den Fig. 1 bis 6 dargestellte obere Hälfte und als Wärmeabgabebereich 2 die in den Fig. 1 bis 6 dargestellte untere Hälfte des Kreislaufverbundsystems bezeichnet. Es ist selbstverständlich auch eine umgekehrte Aufteilung möglich.

Wie den Fig. 1 bis 6 zu entnehmen ist, weist die Leitung 3 zwei Übergangsbereiche 9 auf. Der eine Übergangsbereich 9 ist das Stück der Leitung 3, das sich zwischen dem Knotenpunkt 10, in dem die Leitungen 3 der Wärmeübertrager 4 des Wärmeabgabebereichs 2 zusammengeführt sind, und dem Knotenpunkt 11, von dem die Leitungen 3 der Wärmeübertrager 4 des Wärmeaufnahmebereichs 1 abgehen, erstreckt. Da das Trägermedium im Kreislauf transportiert wird, entspricht der im linken Übergangsbereich 9 transportierte Volumenstrom an Trägermedium dem im rechten Übergangsbereich 9 transportierten Volumenstrom an Trägermedium.

Der andere Übergangsbereich 9 ist das Stück der Leitung 3, das sich zwischen dem Knotenpunkt 12, in dem die Leitungen 3 der Wärmeübertrager 4 des Wärmeaufnahmebereichs 1 zusammengeführt sind, und dem Knotenpunkt 13, von dem die Leitungen 3 der Wärmeübertrager 4 des Wärmeabgabebereichs 2 abgehen, erstreckt.

Wie den Fig. 1 bis 6 zu entnehmen ist, ist in der Leitung 3 zur Erzielung einer Strömung in dem einen Übergangsbereich 9 eine Pumpe 14 vorgesehen. Es handelt sich um den Übergangsbereich 9, der sich zwischen dem Knotenpunkt 10, in dem die Leitungen 3 der Wärmeübertrager 4 des Wärmeabgabebereichs 2 zusammengeführt sind, und dem Knotenpunkt 11, von dem die Leitungen 3 der Wärmeübertrager 4 des Wärmeaufnahmebereichs 1 abgehen, erstreckt.

Bei dem in den Fig. 1 bis 6 dargestellten Kreislaufverbundsystem ist in der Leitung 3 auf der Druckseite der Pumpe 14 ein Sensor 15 zur Bestimmung des mittels der Pumpe 14 geförderten Volumenstroms vorgesehen. Der Sensor 15 ist insoweit in dem gleichen Übergangsbereich 9 wie die Pumpe 14 angeordnet.

Jeder Antrieb 5 ist mittels einer nicht dargestellten Steuereinrichtung oder einer nicht dargestellten Regeleinrichtung ansteuerbar. Jedem Antrieb 5 kann eine eigene Steuereinrichtung oder ein eigene Regeleinrichtung zugeordnet sein. Alternativ kann beispielsweise auch allen Antrieben 5 eine gemeinsame Steuereinrichtung oder eine gemeinsame Regeleinrichtung zugeordnet sein.

So kann als gemeinsame Steuer- bzw. Regeleinrichtung beispielsweise eine übergeordnete speicherprogrammierbare Steuerung (SPS) vorgesehen sein. Diese kann beispielsweise den von der Pumpe 14 geförderten Gesamtvolumenstrom unter Berücksichtigung des mittels des Sensors 15 ermittelten Volumenstroms bestimmen und die Pumpe 14 entsprechend steuern bzw. regeln. Die übergeordnete speicherprogrammierbare Steuerung (SPS) kann auch die einzelnen Ventile 6 und ihren nachfolgend noch näher erläuterten Status "Fixed Open", "Auto" und "0%" steuern bzw. regeln. Die in den Figuren verwendeten Bezeichnungen "Fixed Open", "Auto" und "0%" haben folgende Bedeutung:

| | |
|---|---|
| "Auto" | Das entsprechend bezeichnete Ventil des Wärmeübertragers wird geregelt. |
| "Fixed Open" | Das entsprechend bezeichnete Ventil des Wärmeübertragers ist in seine ungeregelte fixierte Offenstellung verlagert und verbleibt in dieser Offenstellung. Das Ventil kann in dieser Offenstellung zu 100% geöffnet sein. Mit Ausnahme der Stellung "vollständig geschlossen" kann das betreffende Ventil neben der Stellung "100% geöffnet" auch jede beliebige Zwischenstellung einnehmen. Dem betreffenden Ventil kommt keine Regelfunktion zu. Es dient nur der Überströmung für den verbleibenden Volumenstrom. |
| "0%" | Das entsprechend bezeichnete Ventil ist das Ventil eines nicht aktiven Wärmeübertragers. Es ist vollständig geschlossen und wird nicht betätigt. Es nimmt insoweit keinen Einfluss auf das erfindungsgemäße Verfahren. |

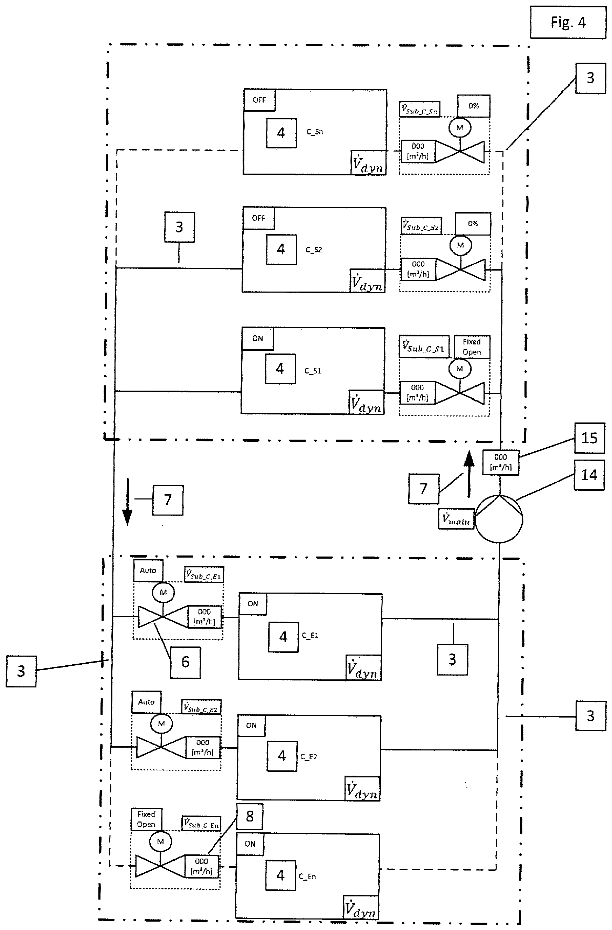

In allen sechs dargestellten Betriebszuständen wird bei der Ausgestaltung nach den Fig. 1 bis 4 und 6 während des Betriebs des Kreislaufverbundsystems in dem Wärmeaufnahmebereich 1 angeordneten Wärmeübertragers 4 immer ein Ventil 6 in seine ungeregelte fixierte Offenstellung verlagert und verbleibt in dieser Offenstellung (Fixed Open) und zumindest ein Ventil 6 - bis auf den in Fig. 4 gezeigten Betriebszustand - eines in dem Wärmeaufnahmebereich 1 angeordneten Wärmeübertragers 4 wird geregelt (Auto).

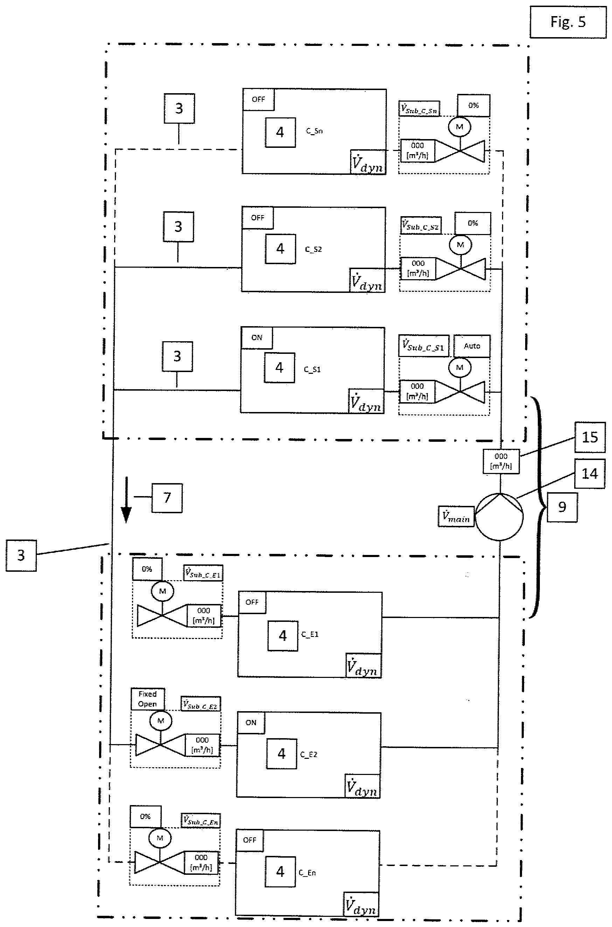

Ferner ist in an allen sechs dargestellten Betriebszuständen in den Fig. 1 bis 6 zumindest ein Ventil 6 eines in dem Wärmeabgabebereich 2 angeordneten Wärmeübertragers 4 in seine ungeregelte fixierte Offenstellung verlagert und verbleibt in dieser Offenstellung (Fixed Open) und zumindest ein Ventil 6 - bis auf den in Fig. 5 gezeigten Betriebszustand - eines in dem Wärmeabgabebereich 2 angeordneten Wärmeübertragers 4 wird geregelt (Auto).

Bei den in den Fig. 1 bis 4 und 6 dargestellten Betriebszuständen ist sowohl in dem Wärmeaufnahmebereich 1 als auch in dem Wärmeabgabebereich 2 jeweils ein Ventil 6 in seine ungeregelte fixierte Offenstellung verlagert und verbleibt in dieser Offenstellung (Fixed Open).

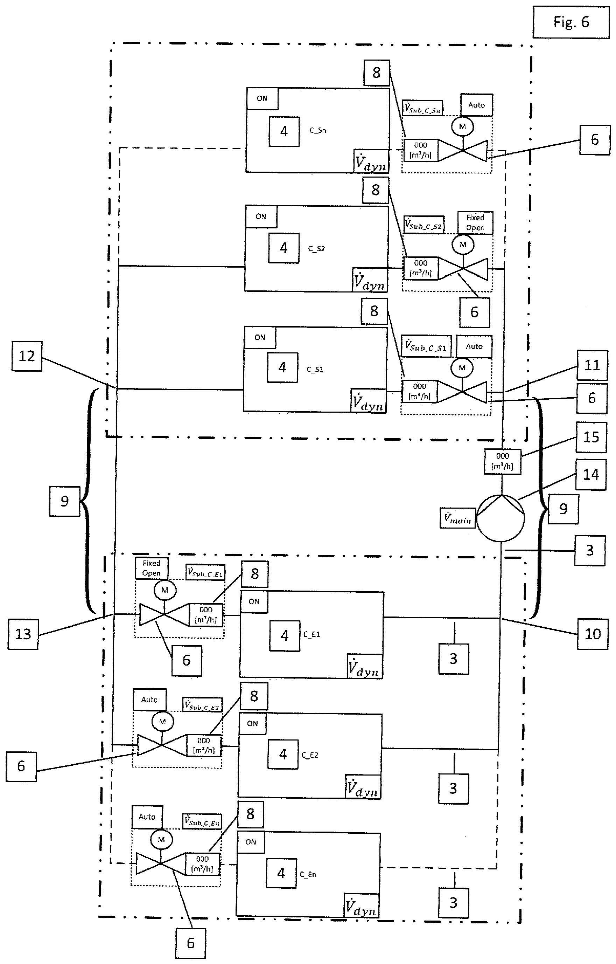

Bei der Ausgestaltung nach den Fig. 1 und 6 werden die beiden anderen Ventile 6 des Wärmeaufnahmebereichs 1 und des Wärmeabgabebereiches 2 geregelt (Kennzeichnung "Auto").

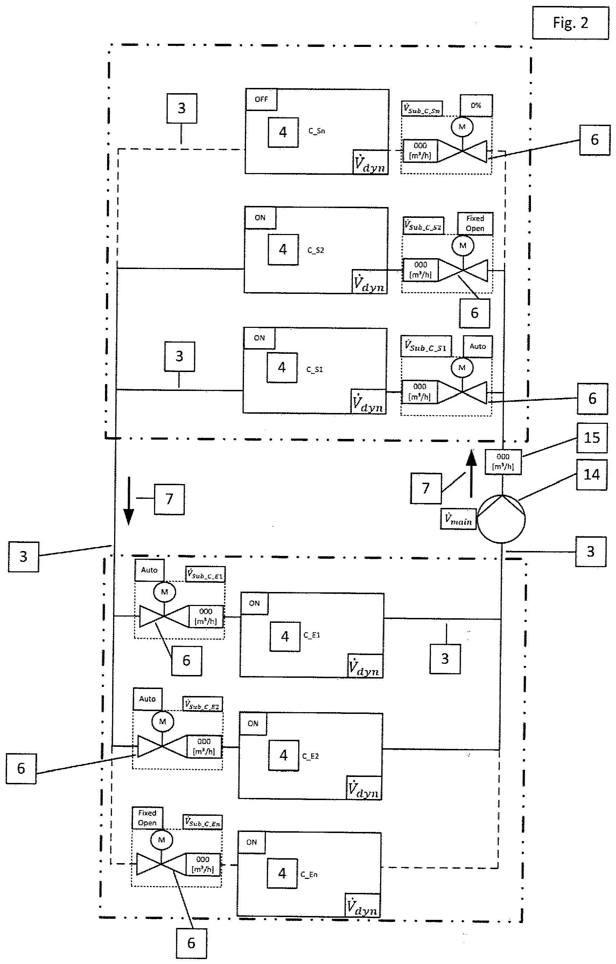

Bei dem in Fig. 2 dargestellten Betriebszustand ist in dem Wärmeaufnahmebereich 1 als auch in dem Wärmeabgabebereich 2 jeweils ein Ventil 6 in seine ungeregelte fixierte Offenstellung verlagert und verbleibt in dieser Offenstellung (Fixed Open). Die beiden anderen Ventile 6 des Wärmeabgabebereiches 2 werden geregelt (Auto). In dem Wärmeaufnahmebereich 1 wird eines der beiden anderen Ventile 6 geregelt (Auto) und das andere der beiden anderen Ventile 6 ist das Ventil 6 eines nicht aktiven Wärmeübertragers 4 (0%).

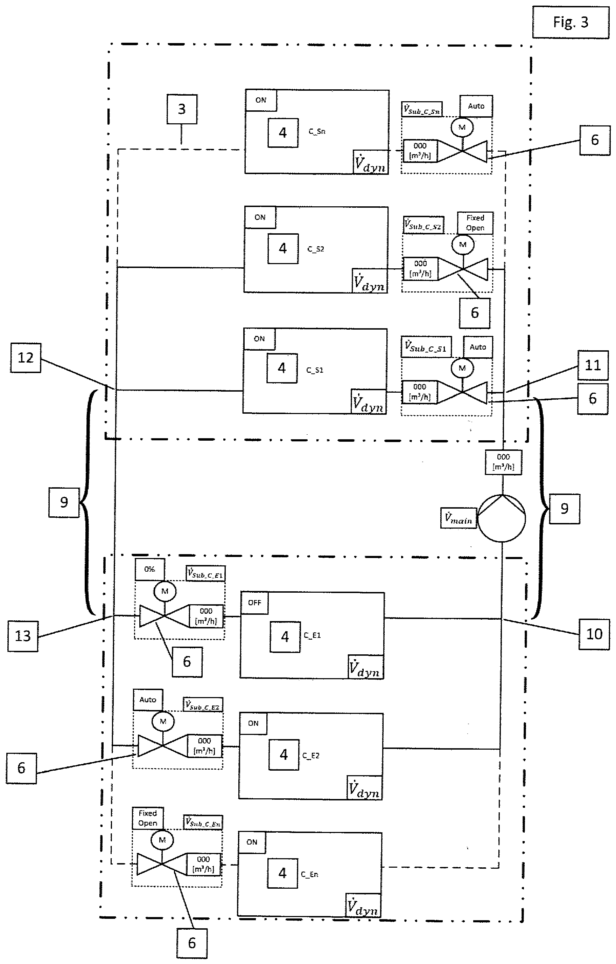

Bei dem in Fig. 3 dargestellten Betriebszustand ist in dem Wärmeaufnahmebereich 1 als auch in dem Wärmeabgabebereich 2 jeweils ein Ventil 6 in seine ungeregelte fixierte Offenstellung verlagert und verbleibt in dieser Offenstellung (Fixed Open). Die beiden anderen Ventile 6 des Wärmeaufnahmebereichs 1 werden geregelt (Auto). In dem Wärmeabgabebereich 2 wird eines der beiden anderen Ventile 6 geregelt (Auto) und das andere der beiden anderen Ventile 6 ist das Ventil 6 eines nicht aktiven Wärmeübertragers 4 (0%).

Bei dem in Fig. 4 dargestellten Betriebszustand ist in dem Wärmeaufnahmebereich 1 als auch in dem Wärmeabgabebereich 2 jeweils ein Ventil 6 in seine ungeregelte fixierte Offenstellung verlagert und verbleibt in dieser Offenstellung (Fixed Open). Die beiden anderen Ventile 6 des Wärmeaufnahmebereichs 1 sind Ventile 6 von nicht aktiven Wärmeübertragern 4 (0%). In dem Wärmeabgabebereich 2 werden die beiden anderen Ventile 6 geregelt (Auto).

Fig. 5 stellt den Betriebszustand eines Kreislaufverbundsystems dar, in dem in dem Wärmeaufnahmebereich 1 ein Ventil 6 geregelt ist (Auto) und in dem Wärmeabgabebereich 2 ein Ventil 6 in seine ungeregelte fixierte Offenstellung verlagert ist und in dieser Offenstellung ("Fixed Open") verbleibt. Alle anderen Ventile 6 sind auf geschlossen eingestellt (0% gefahren). Der Volumenstrom wird sowohl für den Wärmeaufnahmebereich 1 als auch für den Wärmeabgabebereich 2 durch das geregelte Ventil 6 ("Auto") in dem Wärmeaufnahmebereich 1 eingestellt. Selbstverständlich ist auch eine umgekehrte Betriebsweise möglich, bei der in dem Wärmeabgabebereich 2 ein Ventil 6 ("Auto") geregelt ist, bei der im Wärmeaufnahmebereich 1 ein Ventil 6 in seine ungeregelte fixierte Offenstellung verlagert ist und in dieser Offenstellung ("Fixed Open") verbleibt und alle anderen Ventile 6 geschlossen (0%) sind. In den beiden zuvor beschriebenen Betriebszuständen wird der die beiden Wärmeübertrager 4 durchströmende Volumenstrom des Trägermediums nur durch die Leistung der Pumpe 14 eingestellt.

Bei dem in den Fig. 1 bis 6 dargestellten Kreislaufverbundsystem ist in der Leitung 3 auf der Druckseite der Pumpe 14 der Sensor 15 zur Bestimmung des mittels der Pumpe 14 geförderten Volumenstroms vorgesehen. Es ist aber durchaus möglich, dass zur Bestimmung des mittels der Pumpe 14 geförderten Volumenstroms anstelle des durch den zusätzlichen Sensor 15 ermittelten Messwertes die durch die Sensoren 8 ermittelten Messwerte zu einem Gesamtwert addiert werden. Eine Messung findet immer dann statt, solange das einem Sensor 8 zugeordnete, beispielsweise vorgeschaltete, Ventil 6 nicht vollständig geschlossen ist, d. h. sich in seiner 0%-Stellung befindet. Vorzugsweise wird der Sensor 8 eines solchen Wärmeübertragers 4 verwendet, dessen Ventil 6 vollständig in seine Offenstellung verlagert ist und unverändert in seiner Offenstellung verbleibt. Bei einer solchen Ausgestaltung kann beispielsweise der von der Pumpe 14 geförderte Gesamtvolumenstrom unter Berücksichtigung des mittels des Sensors 8 ermittelten Volumenstroms bestimmt und die Pumpe 14 entsprechend gesteuert bzw. geregelt werden.

Alternativ kann die Bestimmung des mittels der Pumpe 14 geförderten Volumenstroms auch durch alle drei Sensoren 8 des Wärmeaufnahmebereiches 1 und/oder des Wärmeabgabebereiches 2 erfolgen. Die Ventile 6 der Wärmeübertrager 4, dessen jeweiliger Sensor 8 zur Bestimmung des Volumenstroms verwendet wird, können dabei vollständig geöffnet oder teilweise geöffnet sein.

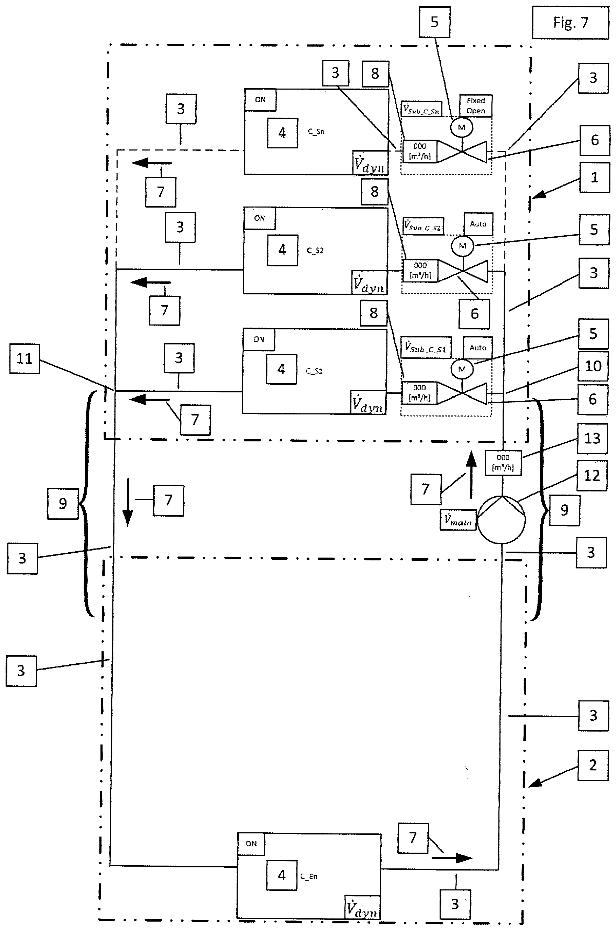

Die Fig. 7 bis 9 zeigen drei verschiedene beispielhafte Betriebszustände eines zweiten Ausführungsbeispiels eines Kreislaufverbundsystems. In dem Wärmeabgabebereich 2 ist jeweils nur ein Wärmeübertrager 4 angeordnet. Da in dem Wärmeabgabebereich 2 nur ein Wärmeübertrager 4 angeordnet ist, ist diesem Wärmeübertrager 4 auch kein Antrieb 5 und auch kein durch den Antrieb 5 steuerbares Ventil 6 zugeordnet. In dem Wärmeaufnahmebereich 1 sind drei strömungstechnisch gesehen parallel zueinander angeordnete Wärmeübertrager 4 angeordnet, mittels denen Wärme von einem warmen Luftvolumenstrom an das in der Leitung 3 strömende Trägermedium abgegeben wird, wobei jedem der drei Wärmeübertrager 4 zur Veränderung der diesen Wärmeübertrager 4 durchströmenden Menge an Trägermedium ein mittels eines Antriebes 5 steuerbares Ventil 6 zugeordnet ist.

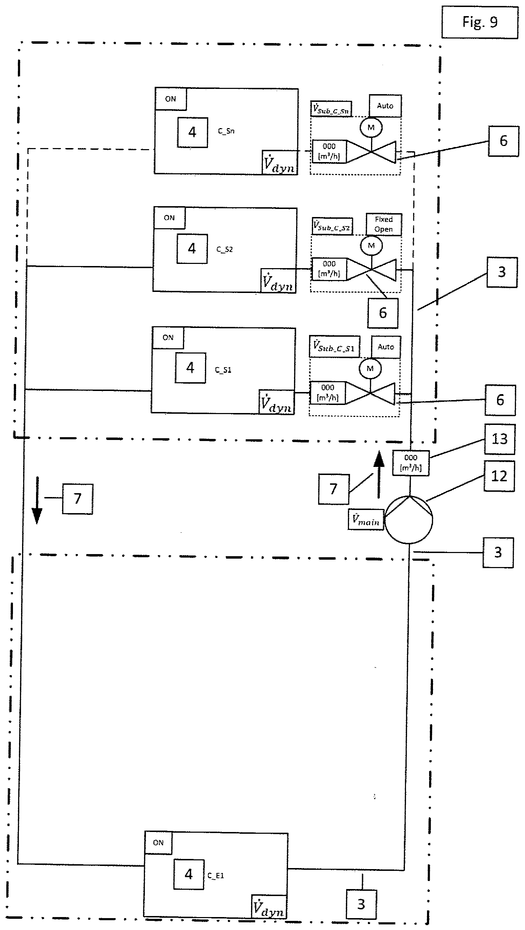

Bei dem in den Fig. 7 und 9 dargestellten Betriebszuständen ist in dem Wärmeaufnahmebereich 1 ein Ventil 6 in seine ungeregelte fixierte Offenstellung verlagert und verbleibt in dieser Offenstellung (Fixed Open), während die beiden anderen Ventile 6 geregelt sind (Auto).

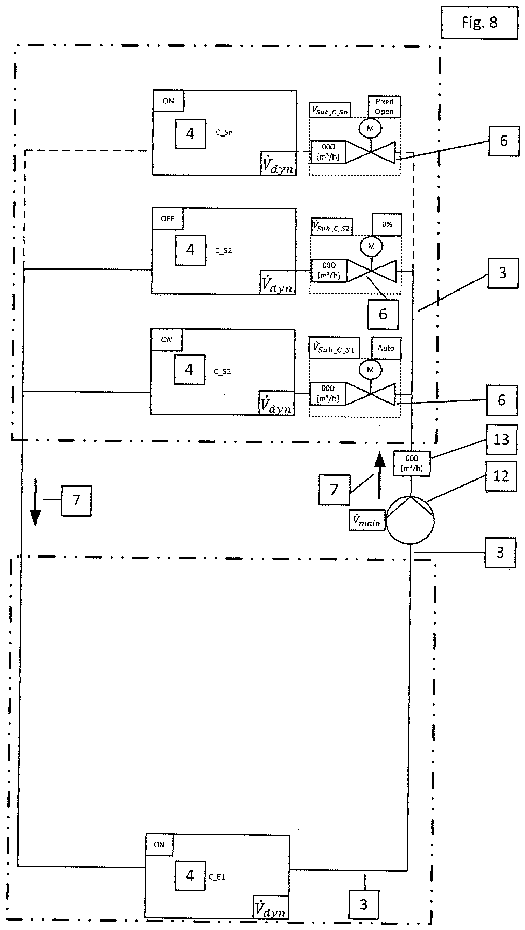

Bei dem in Fig. 8 dargestellten Betriebszustand ist in dem Wärmeaufnahmebereich 1 ein Ventil 6 in seine ungeregelte fixierte Offenstellung verlagert und verbleibt in dieser Offenstellung (Fixed Open), während eines der beiden anderen Ventile 6 geregelt wird (Auto) und das andere der beiden anderen Ventile 6 das Ventil 6 eines nicht aktiven Wärmeübertragers 4 (0%) ist.

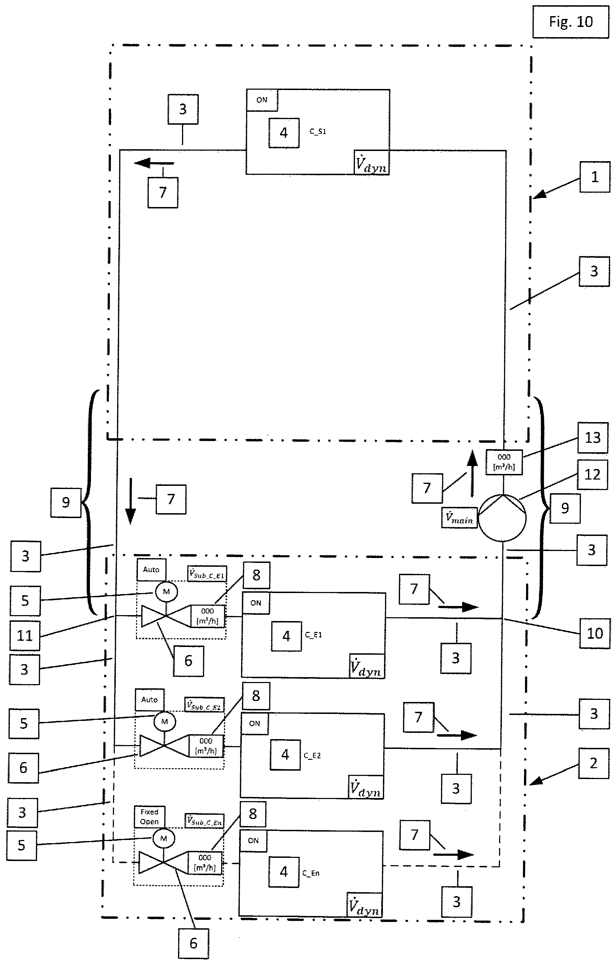

In den Fig. 10 bis 12 ist eine alternative Ausgestaltung eines Kreislaufverbundsystems dargestellt. Hier ist in dem jeweiligen Wärmeaufnahmebereich 1 nur ein Wärmeübertrager 4 angeordnet, wobei dem Wärmeübertrager 4 weder ein Antrieb 5 noch ein Ventil 6 zugeordnet ist. In dem Wärmeabgabebereich 2 sind drei strömungstechnisch gesehen parallel zueinander angeordnete Wärmeübertrager 4 angeordnet, mittels denen Wärme von dem in der Leitung 3 strömenden Trägermedium an einen kalten Luftvolumenstrom abgegeben wird, wobei jedem Wärmeübertrager 4 zur Veränderung der diesen Wärmeübertrager 4 durchströmenden Menge an Trägermedium ein mittels eines Antriebes 5 steuerbares Ventil 6 zugeordnet ist.

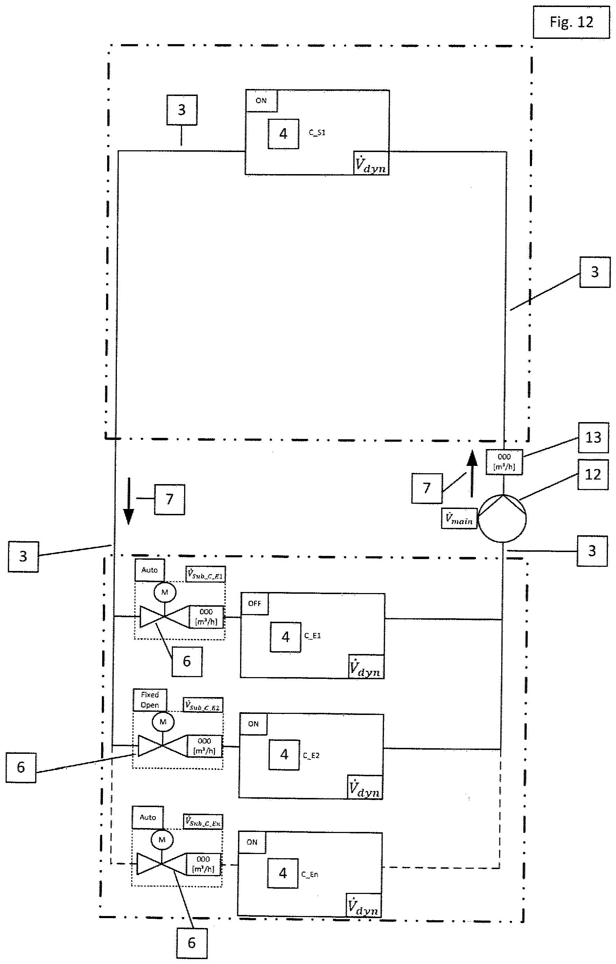

Bei den Betriebszuständen nach den Fig. 10 und 12 ist in dem Wärmeabgabebereich 2 jeweils ein Ventil 6 in seine ungeregelte fixierte Offenstellung verlagert und verbleibt in dieser Offenstellung (Fixed Open), während die beiden anderen Ventile 6 geregelt werden (Auto).

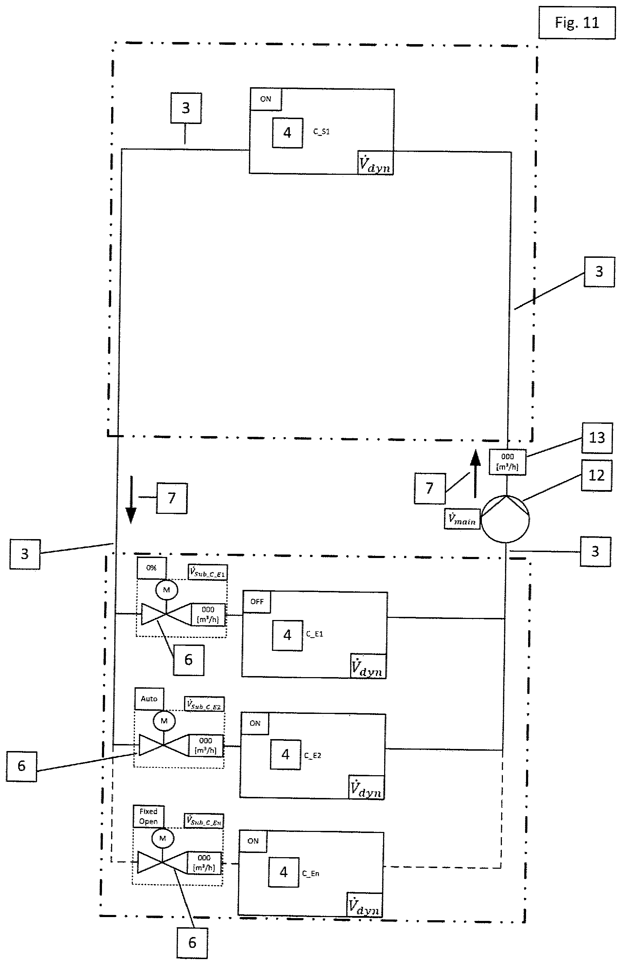

Bei dem in Fig. 11 dargestellten Betriebszustand ist in dem Wärmeabgabebereich 2 jeweils wiederum ein Ventil 6 in seine ungeregelte fixierte Offenstellung verlagert und verbleibt in dieser Offenstellung (Fixed Open), während eines der beiden anderen Ventile 6 geregelt (Auto) wird und das andere der beiden anderen Ventile 6 das Ventil 6 eines nicht aktiven Wärmeübertragers 4 (0 %) darstellt.

## Patentansprüche

1. Verfahren zur Einstellung eines Betriebszustandes eines Kreislaufverbundsystems einer lufttechnischen, vorzugsweise raumlufttechnischen Anlage, wobei das Kreislaufverbundsystem einen Wärmeaufnahmebereich (1) und einen Wärmeabgabebereich (2) aufweist und wobei der Wärmeaufnahmebereich (1) und der Wärmeabgabebereich (2) über zumindest eine, einen geschlossenen Kreislauf bildende und von einem Trägermedium durchströmte, Leitung (3) verbunden sind, und wobei
entweder
zum einen in dem Wärmeaufnahmebereich (1) zumindest ein Wärmeübertrager (4) angeordnet ist, mittels dem Wärme von einem warmen Luftvolumenstrom an das in der Leitung (3) strömende Trägermedium abgegeben wird, und - sofern in dem Wärmeaufnahmebereich (1) mehrere strömungstechnisch gesehen parallel zueinander angeordnete Wärmeübertrager (4) angeordnet sind, mittels denen Wärme von einem warmen Luftvolumenstrom an das in der Leitung (3) strömende Trägermedium abgegeben wird - jedem Wärmeübertrager (4) zur Veränderung der diesen Wärmeübertrager (4) durchströmenden Menge an Trägermedium ein mittels eines Antriebes (5) steuerbares Ventil (6) zugeordnet ist, und
zum anderen in dem Wärmeabgabebereich (2) mehrere strömungstechnisch gesehen parallel zueinander angeordnete Wärmeübertrager (4) angeordnet sind, mittels denen Wärme von dem in der Leitung (3) strömenden Trägermedium an einen kalten Luftvolumenstrom abgegeben wird, wobei jedem Wärmeübertrager (4) zur Veränderung der diesen Wärmeübertrager (4) durchströmenden Menge an Trägermedium ein mittels eines Antriebes (5) steuerbares Ventil (6) zugeordnet ist,
oder aber
zum einen in dem Wärmeaufnahmebereich (1) mehrere strömungstechnisch gesehen parallel zueinander angeordnete Wärmeübertrager (4) angeordnet sind, mittels denen Wärme von dem in der Leitung (3) strömenden Trägermedium an einen kalten Luftvolumenstrom abgegeben wird, wobei jedem Wärmeübertrager (4) zur Veränderung der diesen Wärmeübertrager (4) durchströmenden Menge an Trägermedium ein mittels eines Antriebes (5) steuerbares Ventil (6) zugeordnet ist, und
zum anderen in dem Wärmeabgabebereich (2) zumindest ein Wärmeübertrager (4) angeordnet ist, mittels dem Wärme von einem warmen Luftvolumenstrom an das in der Leitung (3) strömende Trägermedium abgegeben wird, und - sofern in dem Wärmeabgabebereich (2) mehrere strömungstechnisch gesehen parallel zueinander angeordnete Wärmeübertrager (4) angeordnet sind, mittels denen Wärme von einem warmen Luftvolumenstrom an das in der Leitung (3) strömende Trägermedium abgegeben wird - jedem Wärmeübertrager (4) zur Veränderung der diesen Wärmeübertrager (4) durchströmenden Menge an Trägermedium ein mittels eines Antriebes (5) steuerbares Ventil (6) zugeordnet ist, und
wobei in der Leitung (3) zur Erzielung einer Strömung, vorzugsweise in einem der beiden Übergangsbereiche (9), zumindest eine geregelte Pumpe (14) vorgesehen ist und jeder Antrieb (5) mittels einer Steuereinrichtung oder Regeleinrichtung ansteuerbar ist, wobei während des Betriebs des Kreislaufverbundsystems
- in dem Wärmeaufnahmebereich (1) - sofern mehrere Wärmeübertrager (4) in dem Wärmeaufnahmebereich (1) angeordnet sind - nur das Ventil (6) von einem einzigen in dem Wärmeaufnahmebereich (1) angeordneten Wärmeübertragers (4) in eine ungeregelte fixierte Offenstellung verlagert wird und unverändert in seiner Offenstellung verbleibt und das Ventil (6) zumindest eines in dem Wärmeaufnahmebereich (1) angeordneten Wärmeübertragers (4) geregelt wird
und/oder
- in dem Wärmeabgabebereich (2) - sofern mehrere Wärmeübertrager (4) in dem Wärmeabgabebereich (2) angeordnet sind - nur das Ventil (6) von einem einzigen in dem Wärmeabgabebereich (2) angeordneten Wärmeübertragers (4) in eine ungeregelte fixierte Offenstellung verlagert wird und unverändert in seiner Offenstellung verbleibt und das Ventil (6) zumindest eines in dem Wärmeabgabebereich (2) angeordneten Wärmeübertragers (4) geregelt wird.

2. Verfahren nach dem vorhergehenden Anspruch, wobei in der Leitung (3), vorzugsweise in einem der beiden Übergangsbereiche (9), zumindest ein Sensor (15) zur Bestimmung des in der Leitung (3) strömenden Volumenstroms an Trägermedium vorgesehen ist.

3. Verfahren nach dem vorhergehenden Anspruch, wobei der Sensor (15) auf der Druckseite der Pumpe (14) angeordnet ist.

4. Verfahren nach einem der vorhergehenden Ansprüche, wobei zumindest bei einem Wärmeübertrager (4) das diesem Wärmeübertrager (4) zugeordnete Ventil (6) in Strömungsrichtung (7) des Trägermediums gesehen vorgelagert ist.

5. Verfahren nach einem der vorhergehenden Ansprüche, wobei zumindest einem Wärmeübertrager (4) ein Sensor (8) zur Bestimmung des durch diesen Wärmeübertrager (4) strömenden Volumenstroms des Trägermediums zugeordnet ist, wobei vorzugsweise der Sensor (8) dem Wärmeübertrager (4) in Strömungsrichtung (7) des Trägermediums gesehen vorgelagert ist.

6. Verfahren nach einem der vorhergehenden Ansprüche, wobei als Trägermedium ein Wasser/Glykol-Gemisch verwendet wird.

7. Verfahren nach einem der Ansprüche 1 bis 5, wobei als Trägermedium Wasser verwendet wird.

8. Verfahren nach einem der vorhergehenden Ansprüche, wobei jedem Antrieb (5) eine eigene Steuereinrichtung oder Regeleinrichtung zugeordnet ist.

9. Verfahren nach einem der Ansprüche 1 bis 7, wobei allen Antrieben (5) eine gemeinsame Steuereinrichtung oder Regeleinrichtung zugeordnet ist.

10. Verfahren nach einem der Ansprüche 5 bis 9, wobei zur Bestimmung des in der Leitung (3) strömenden Volumenstroms, vorzugsweise zur Bestimmung des in einem der beiden Übergangsbereiche (9) strömenden Volumenstroms, zumindest einer der Sensoren (8) verwendet wird.

11. Verfahren nach dem vorhergehenden Anspruch, wobei zur Bestimmung des in der Leitung (3) strömenden Volumenstroms, vorzugsweise zur Bestimmung des in einem der beiden Übergangsbereiche (9) strömenden Volumenstroms, ein solcher Sensor (8) verwendet wird, dessen zugeordnetes Ventil (6) in eine ungeregelte fixierte Offenstellung verlagert wird und unverändert in seiner Offenstellung verbleibt.

## Claims

1. Method for adjusting an operating state of a circuit composite system of an air technical installation, preferably a space-air technical installation, wherein the circuit composite system comprises a heat absorption region (1) and a heat emission region (2), and wherein the heat absorption region (1) and the heat emission region (2) are connected by means of at least one closed circuit and a line (3) through which a carrier medium flows, and wherein
either
on the one hand, at least one heat exchanger (4) is arranged in the heat absorption region (1), by means of which heat from a hot air volume flow is emitted to the carrier medium flowing in the line (3), and, inasmuch as several heat exchangers (4) are arranged in the heat absorption region (1), arranged parallel to one another in respect of their technical flow performance, by means of which heat is emitted from a hot air volume flow to the carrier medium flowing in the line (3), then a valve (6), which can be controlled by a drive (5), is assigned to each heat exchanger (4), in order to change the quantity of carrier medium flowing through this heat exchanger (4), and
on the other hand, several heat exchangers (4) are arranged in the heat emission region (2), arranged parallel to one another in respect of their technical flow performance, by means of which heat is emitted from the carrier medium flowing in the line (3) to a cold air volume flow, wherein a valve (6), which can be controlled by a drive (5), is assigned to each heat exchanger (4), in order to change the quantity of carrier medium flowing through this heat exchanger (4),
or
on the one hand, several heat exchangers (4), arranged parallel to one another in respect of their technical flow performance, are arranged in the heat emission region (1), by means of which heat is emitted from the carrier medium flowing in the line (3) to a cold air volume flow, wherein a valve (6), which can be controlled by a drive (5), is assigned to each heat exchanger (4), in order to change the quantity of carrier medium flowing through this heat exchanger (4), and
on the other hand, at least one heat exchanger (4) is arranged in the heat emission region (2), by means of which heat is emitted from a hot air volume flow to the carrier medium flowing in the line (3), and, inasmuch as several heat exchangers (4), arranged parallel to one another in respect of their technical flow performance, are arranged in the heat emission region (2), by means of which heat is emitted from a hot air volume flow to the carrier medium flowing in the line (3), then a valve (6), which can be controlled by means of a drive (5), is assigned to each heat exchanger (4), in order to change the quantity of carrier medium flowing through this heat exchanger (4), and wherein at least one regulated pump (14) is provided in the line (3) in order to achieve a flow, preferably in one of the two transfer regions (9), and each drive (5) can be actuated by means of a control device or regulating device, wherein, during the operation of the circuit composite system,
- inasmuch as several heat exchangers (4) are arranged in the heat absorption region (1), only the valve (6) of a single heat exchanger (4) arranged in the heat absorption region (1) is moved into an unregulated fixed open position, and remains unchanged in its open position, and the valve (6) of at least one heat exchanger (4) arranged in the heat absorption region (1) is regulated,
and/or
- inasmuch as several heat exchangers (4) are arranged in the heat emission region (2), only the valve (6) of a single heat exchanger (4) arranged in the heat emission region (2) is moved into an unregulated fixed open position, and remains unchanged in its open position, and the valve (6) of at least one heat exchanger (4) arranged in the heat emission region (2) is regulated.

2. Method according to the preceding claim, wherein at least one sensor (15) is provided in the line (3), preferably in one of the two transfer regions (9), for determining the volume flow of carrier medium flowing in the line (3).

3. Method according to the preceding claim, wherein the sensor (15) is arranged on the pressure side of the pump (14).

4. Method according to any one of the preceding claims, wherein, with at least one heat exchanger (4), the valve (6) assigned to this heat exchanger (4) is arranged upstream seen in the direction of flow (7) of the carrier medium.

5. Method according to any one of the preceding claims, wherein a sensor (8) is assigned to at least one heat exchanger (4) in order to determine the volume flow of carrier medium flowing through this heat exchanger (4), wherein the sensor (8) is preferably upstream of the heat exchanger (4), seen in the direction of flow (7) of the carrier medium.

6. Method according to any one of the preceding claims, wherein a water/glycol mixture is used as the carrier medium.

7. Method according to any one of claims 1 to 5, wherein water is used as the carrier medium.

8. Method according to any one of the preceding claims, wherein an individual control device or regulating device is assigned to each drive (5).

9. Method according to any one of claims 1 to 7, wherein a common control device or regulating device is assigned to all the drives (5).

10. Method according to any one of claims 5 to 9, wherein at least one of the sensors (8) is used to determine the volume flow flowing in the line (3), preferably for determining the volume flow flowing in one of the two transfer regions (9).

11. Method according to the preceding claim, wherein, in order to determine the volume flow flowing in the line (3), preferably for determining the volume flow flowing in one of the two transfer regions (9), such a sensor (8) is used of which the assigned valve (6) is moved into an unregulated fixed open position, and remains unchanged in its open position.

## Revendications

1. Procédé d'ajustement d'un état de fonctionnement d'un système mixte de circulation d'une installation de gestion de l'air, de manière préférée d'un système de ventilation, le système mixte de circulation présentant une région d'absorption de chaleur (1) et une région de fourniture de chaleur (2), et la région d'absorption de chaleur (1) et la région de fourniture de chaleur (2) étant reliées par au moins une conduite (3) formant un circuit fermé et traversée par un milieu porteur, et
soit
d'une part, au moins un échangeur de chaleur (4), au moyen duquel de la chaleur provenant d'un flux volumétrique d'air chaud est fournie au milieu porteur circulant dans la conduite (3), est agencé dans la région d'absorption de chaleur (1), et - dans la mesure où plusieurs échangeurs de chaleur (4), agencés de manière parallèle les uns aux autres en termes de technique de circulation et au moyen desquels de la chaleur provenant d'un flux volumétrique d'air chaud est fournie au milieu porteur circulant dans la conduite (3), sont agencés dans la région d'absorption de chaleur (1) - une vanne (6) pouvant être commandée au moyen d'un entraînement (5) est associée à chaque échangeur de chaleur (4) afin de modifier la quantité de milieu porteur traversant ledit échangeur de chaleur (4), et
d'autre part, plusieurs échangeurs de chaleur (4), agencés de manière parallèle les uns aux autres en termes de technique de circulation et au moyen desquels de la chaleur est fournie depuis le milieu porteur circulant dans la conduite (3) vers un flux volumétrique d'air froid, sont agencés dans la région de fourniture de chaleur (2), une vanne (6) pouvant être commandée au moyen d'un entraînement (5) étant associée à chaque échangeur de chaleur (4) afin de modifier la quantité de milieu porteur circulant à travers ledit échangeur de chaleur (4),
soit
d'une part, plusieurs échangeurs de chaleur (4), au moyen desquels de la chaleur est fournie depuis le milieu porteur circulant dans la conduite (3) vers un flux volumétrique d'air froid, sont agencés de manière parallèle les uns aux autres en termes de technique de circulation dans la région d'absorption de chaleur (1), une vanne (6) pouvant être commandée au moyen d'un entraînement (5) étant associée à chaque échangeur de chaleur (4) afin de modifier la quantité de milieu porteur circulant à travers ledit échangeur de chaleur (4), et
d'autre part, au moins un échangeur de chaleur (4), au moyen duquel de la chaleur provenant d'un flux volumétrique d'air chaud est fournie au milieu porteur circulant dans la conduite (3), est agencé dans la région de fourniture de chaleur (2) et - dans la mesure où plusieurs échangeurs de chaleur (4), agencés de manière parallèle les uns aux autres en termes de technique de circulation et au moyen desquels de la chaleur provenant d'un flux volumétrique d'air chaud est fournie au milieu porteur circulant dans la conduite (3), sont agencés dans la région de fourniture de chaleur (2) - une vanne (6) pouvant être commandée au moyen d'un entraînement (5) est associée à chaque échangeur de chaleur (4) afin de modifier la quantité de milieu porteur traversant ledit échangeur de chaleur (4), et
au moins une pompe régulée (14) étant prévue dans la conduite (3) afin d'obtenir une circulation, de manière préférée dans une des deux régions de transition (9), et chaque entraînement (5) pouvant être commandé au moyen d'un dispositif de commande ou d'un dispositif de régulation, étant donné que, pendant le fonctionnement du système mixte de circulation :
- dans la région d'absorption de chaleur (1) - dans la mesure où plusieurs échangeurs de chaleur (4) sont agencés dans la région d'absorption de chaleur (1) - seule la vanne (6) d'un unique échangeur de chaleur (4) agencé dans la région d'absorption de chaleur (1) est déplacée dans une position ouverte fixe non régulée et reste inchangée dans sa position ouverte et la vanne (6) d'au moins un échangeur de chaleur (4) agencé dans la région d'absorption de chaleur (1) est régulée
et/ou
- dans la région de fourniture de chaleur (2) - si plusieurs échangeurs de chaleur (4) sont agencés dans la région de fourniture de chaleur (2) - seule la vanne (6) d'un unique échangeur de chaleur (4) agencé dans la région de fourniture de chaleur (2) est déplacée dans une position ouverte fixe non régulée et reste inchangée dans sa position ouverte et la vanne (6) d'au moins un échangeur de chaleur (4) agencé dans la région de fourniture de chaleur (2) est régulée.

2. Procédé selon l'une quelconque des revendications précédentes, au moins un capteur (15) étant prévu dans la conduite (3), de manière préférée dans une des deux régions de transition (9), afin de déterminer le flux volumétrique de milieu porteur circulant dans la conduite (3).

3. Procédé selon la revendication précédente, le capteur (15) étant agencé du côté pression de la pompe (14).

4. Procédé selon l'une quelconque des revendications précédentes, la vanne (6) associée à un échangeur de chaleur (4) étant, au moins pour ledit échangeur de chaleur (4), agencée en amont dans la direction de circulation (7) du milieu porteur.

5. Procédé selon l'une quelconque des revendications précédentes, un capteur (8) permettant de déterminer le flux volumétrique de milieu porteur circulant à travers ledit échangeur de chaleur (4) étant associé à au moins un échangeur de chaleur (4), le capteur (8) étant de manière préférée agencé en amont de l'échangeur de chaleur (4) dans la direction de circulation (7) du milieu porteur.

6. Procédé selon l'une quelconque des revendications précédentes, un mélange eau/glycol étant utilisé comme milieu porteur.

7. Procédé selon l'une quelconque des revendications 1 à 5, de l'eau étant utilisée comme milieu porteur.

8. Procédé selon l'une quelconque des revendications précédentes, un dispositif de commande ou de régulation spécifique étant associé à chaque entraînement (5).

9. Procédé selon l'une quelconque des revendications 1 à 7, un dispositif de commande ou de régulation commun étant associé à tous les entraînements (5).

10. Procédé selon l'une quelconque des revendications 5 à 9, au moins un des capteurs (8) étant utilisé pour déterminer le flux volumétrique circulant dans la conduite (3), de manière préférée pour déterminer le flux volumétrique circulant dans l'une des deux régions de transition (9).

11. Procédé selon la revendication précédente, un tel capteur (8), dont la vanne (6) associée est déplacée dans une position ouverte fixe non régulée et reste inchangée dans sa position ouverte, étant utilisé pour déterminer le flux volumétrique circulant dans la conduite (3), de manière préférée pour déterminer le flux volumétrique circulant dans l'une des deux régions de transition (9).
